# EUROPÄISCHE PATENTSCHRIFT

(11) **EP 1 502 165 B1**
(45) Veröffentlichungstag und Bekanntmachung des Hinweises auf die Patenterteilung: **12.11.2008**
(21) Anmeldenummer: 02792639.3
(22) Anmeldetag: 07.12.2002
(51) Int. Cl.: G05D 1/02, B60K 31/00

(54) **VERFAHREN UND VORRICHTUNG ZUR KURSPRAEDIKTION BEI KRAFTFAHRZEUGEN**
METHOD AND DEVICE FOR PREDICTING THE COURSE OF MOTOR VEHICLES
PROCEDE ET DISPOSITIF POUR PREVOIR LA TRAJECTOIRE DE VEHICULES

(30) Priorität: 27.04.2002 DE 10218924
(43) Veröffentlichungstag der Anmeldung: 02.02.2005
(73) Patentinhaber: ROBERT BOSCH GMBH, 70442 Stuttgart (DE)
(72) Erfinder: WINNER, Hermann, 76467 Bietigheim (DE); URBAN, Werner, 71665 Vaihingen/Enz (DE); LUEDER, Jens, 70806 Kornwestheim (DE); MAASS, Alexander, 71229 Leonberg (DE)
(86) Internationale Anmeldenummer: PCT/DE2002/004487
(87) Internationale Veröffentlichungsnummer: WO 2003/093914

(56) Entgegenhaltungen:
- WO-A-99/30183
- DE-A- 10 138 641
- DE-A- 19 944 542
- US-A- 4 970 653
- US-A- 5 343 206
- US-B1- 6 300 865

## Beschreibung

Die Erfindung betrifft ein Verfahren und eine Vorrichtung zur Kursprädiktion bei Kraftfahrzeugen, die ein Ortungssystem für vor dem Fahrzeug befindliche Objekte aufweisen, bei dem anhand gemessener Abstands- und Azimutwinkeldaten für Standziele am Fahrbahnrand eine Funktion berechnet wird, die den Verlauf des Fahrbahnrandes beschreibt, wobei mehrere Standziele identifiziert und verfolgt werden, man für mehrere Teilmengen der Menge der verfolgten Standziele, unter der Annahme, daß diese Standziele am Fahrbahnrand liegen, jweils einen möglichen Fahrbahnrandverlauf abschätzt und aus den erhaltenen möglichen Fahrbahnrandverläufen anhand vorgegebener Plausibilitätskriterien den wahrscheinlichsten Fahrbahnrandverlauf bestimmt.

Insbesondere bezieht sich die Erfindung auf ein Verfahren zur Kursprädiktion im Zusammenhang mit einem sogenannten ACC-System (Adapted Cruise Control), das dazu dient, den Abstand des Fahrzeugs zu einem vorausfahrenden, mit Hilfe des Ortungssystems georteten Fahrzeugs so zu regeln, daß das vorausfahrende Fahrzeug in einem geeigneten Sicherheitsabstand verfolgt wird.

### STAND DER TECHNIK

Moderne Kraftfahrzeuge sind häufig mit einem Fahrerassistenzsystem ausgerüstet, das den Fahrer bei der Fahrzeugführung unterstützt und ihm die Ausführung bestimmter Fahrmanöver erleichtert. Zu diesem Zweck benötigt das Fahrerassistenzsystem Informationen über die Umgebung des Fahrzeugs, die mit Hilfe des Ortungssystems gewonnen werden, beispielsweise mit Hilfe eines Radarsystems, eines Lidarsystems oder eines Videokamerasystems. Das eingangs erwähnte ACC-System ist ein Beispiel für ein solches Fahrerassistenzsystem oder für ein Teilsystem eines solchen Fahrerassistenzsystems, das darüber hinaus auch noch weitere Funktionen erfüllen kann. Einzelheiten eines solchen ACC-Systems werden z.B. beschrieben in der Veröffentlichung "Adaptive Cruise Control-System Aspects and Development Trends" von Winner, Witte et al., veröffentlicht als SAE Technical Paper Series Nr. 961010 auf der SAE vom 26. bis 29. Februar 1996. Wenn das Ortungssystem bei einem ACC-System durch einen Radarsensor gebildet wird, können nicht nur die Objektabstände, sondern auch die Relativgeschwindigkeiten der Objekte mit Hilfe des Dopplereffektes direkt gemessen werden, so daß durch Vergleich der Relativgeschwindigkeiten mit der Absolutgeschwindigkeit des eigenen Fahrzeugs, also des Fahrzeugs, das mit dem ACC-System ausgerüstet ist, zwischen vorausfahrenden Fahrzeugen und ortsfesten Objekten, sogenannten Standzielen, wie beispielsweise Verkehrsschildern, Leitpfosten und dergleichen unterschieden werden kann.

Für die Abstandsregelung muß außerdem zwischen Fahrzeugen auf der eigenen Fahrspur und auf Nebenspuren unterschieden werden. Dies ist möglich, weil das Radarsystem auch eine gewisse Winkelauflösung aufweist. Aus den Abstands- und Winkeldaten läßt sich dann die Position der georteten Objekte in einem zweidimensionalen kartesischen Koordinatensystem angeben. Bei geradlinigem Fahrbahnverlauf kann so relativ zuverlässig abgeschätzt werden, ob sich ein vorausfahrendes Fahrzeug auf der eigenen Spur oder auf einer Nebenspur befindet. Bei gekrümmtem Fahrbahnverlauf muß bei dieser Entscheidung jedoch auch die Fahrbahnkrümmung berücksichtigt werden. Eine wichtige Teilfunktion des ACC-Systems besteht deshalb darin, den voraussichtlichen Verlauf der Fahrbahn in einem bestimmten Streckenabschnitt vor dem eigenen Fahrzeug abzuschätzen. Diese Funktion wird als Kursprädiktion bezeichnet.

Bei einem bekannten Verfahren zur Kursprädiktion werden die Bewegungsdaten des eigenen Fahrzeugs ausgewertet. Anhand des Lenkeinschlags und/oder anhand der mit geeigneten Sensoren gemessenen Querbeschleunigung oder Giergeschwindigkeit des Fahrzeugs läßt sich in Verbindung mit der Eigengeschwindigkeit des Fahrzeugs die Fahrbahnkrümmung in dem derzeit von dem Fahrzeug befahrenen Streckenabschnitt abschätzen, und die Kursprädiktion beruht dann auf der Annahme, daß sich die Fahrbahnkrümmung in dem vorausliegenden Streckenabschnitt allenfalls geringfügig ändern wird.

Aus WO 99/30183 ist ein Verfahren der eingangs, genannten Art bekannt, bei dem für verschiedene Paare von Standzielen jeweils ein Abstand und eine Richtung bestimmt werden und dann mit Hilfe einer Hough-Transformation eine plausible, stetige Funktion berechnet wird, die den Fahrbahnverlauf beschreibt.

Aus DE 199 44 542 A1 ist es bekannt, Fahrbahnrandverläufe durch Polynome zu beschreiben.

Weitere Verfahren zur Bestimmung von Fahrbahnrandverläufen werden beschrieben in US 6 300 865 B1, US 5 343 206 A, US 4 970 653 A sowie WO 03/015053 A1, die zum Stand der Technik gemäß Artikel 54(3) und (4) EPÜ gehört.

### AUFGABE, LÖSUNG UND VORTEILE DER ERFINDUNG

Aufgabe der Erfindung ist, ein weiteres Verfahren zur Kursprädiktion anzugeben, das mit relativ geringem Verarbeitungsaufwand eine relativ genaue Bestimmung des Fahrbahnverlaufs ermöglicht.

Diese Aufgabe wird erfindungsgemäß durch das Verfahren nach Anspruch 1 und die Vorrichtung nach Anspruch 8 gelöst.

Bei dem vorgeschlagenen Verfahren werden zur Bestimmung des Fahrbahnrandverlaufes in erster Linie lokalisierte Standziele herangezogen, deren Bewegung relativ zu dem eigenen Fahrzeug sich mit bekannten Träcking-Verfahren über mehrere Radar-Meßzyklen hinweg verfolgen läßt. Bei diesen Standzielen kann es sich um Fahrbahnrandobjekte handeln, beispielsweise um Pfosten, Verkehrsschilder und dergleichen, die sich unmittelbar am Fahrbahnrand befinden, oder auch um weiter vom Fahrbahnrand abgelegene Objekte, die hier als Störobjekte bezeichnet werden sollen. Allein anhand der Ortungsdaten läßt sich nicht entscheiden, zu welchem Typ die erfaßten Standziele gehören. Bei dem erfindungsgemäßen Verfahren wird deshalb zunächst unterstellt, daß sich die Objekte unmittelbar am Fahrbahnrand befinden und somit als Stützstellen für eine Funktion, beispielsweise ein Polynom, dienen können, das den Verlauf des Fahrbahnrandes beschreibt. Je größer die Anzahl der benutzten Stützstellen ist, desto höher ist die Genauigkeit, mit der der tatsächliche Fahrbahnrandverlauf approximiert werden kann.

Da es sich bei den als Stützstellen benutzten Standzielen jedoch auch um Störobjekte handeln kann, die nicht wirklich am Fahrbahnrand liegen, erhält man je nach Auswahl der Stützstellen auch Fahrbahnrandverläufe, die erheblich vom echten Fahrbahnrandverlauf abweichen. Es ist jedoch möglich, solche unechten Fahrbahnrandverläufe anhand einiger Plausibilitätskriterien zu erkennen und zu eliminieren.

Ein gekrümmter Fahrbahnrand kann in niedrigster Näherung durch eine Parabel der Form y = a + cx² beschreiben werden. Die Krümmung (zweite Ableitung) ist dann gleich 2c. Für die Bestimmung der Koeffizienten a und c benötigt man nur zwei Stützstellen, entweder die Positionen zweier Standziele oder die Position eines Standziels zusammen mit der geschätzten oder bekannten Position des Fahrbahnrandes auf Höhe des eigenen Fahrzeugs. Wenn der Verlauf der linken und rechten Fahrbahnränder bereits in einem vorausgegangenen Berechnungszyklus durch geeignete Funktionen angenähert worden ist, so ist damit der Koeffizient a für beide Fahrbahnränder bereits bekannt. Falls die Breite der Fahrbahn und die Querposition des eigenen Fahrzeugs auf der Fahrbahn noch nicht bekannt sind, kann man annehmen, daß die Fahrbahn eine bestimmte Mindestbreite haben wird, die jedenfalls größer ist als die Breite des Fahrzeugs. Praktikabel ist beispielsweise die Annahme, daß die Fahrbahn eine Breite von 7m hat und daß das eigene Fahrzeug auf der Fahrbahnmitte fährt. Für die Parabel, die den rechten Fahrbahnrand beschreibt, erhält man dann unmittelbar a = 3,5m. Der Koeffizient c läßt sich dann direkt aus den Ortskoordinaten eines einzigen Objektes berechnen, unter der Annahme, daß sich dieses Objekt direkt am rechten Fahrbahnrand befindet. Wenn man auf diese Weise einen unzulässig hohen Wert für die Krümmung 2c erhält, so kann das betreffende Standziel als Störobjekt klassifiziert werden. Dieses Kriterium wird um so leistungsfähiger, je näher das betrachtete Objekt dem eigenen Fahrzeug kommt.

Bei dem erfindungsgemäßen Verfahren, erübrigt es sich, die erfaßten Standziele einzeln als Störobjekte oder Fahrbahnrandziele zu klassifizieren und einer bestimmten Fahrbahnseite zuzuordnen. Das Plausibilitätskriterium besteht hier darin, daß die Fahrbahnrandkrümmungen, die man für verschiedene Kombinationen von Standzielen erhält, eine signifikante Häufung bei der "richtigen" Krümmung zeigen. Die Einflüsse von Störobjekten werden somit bei diesem Verfahren durch die statistische Auswertung eliminiert.

Ein Vorteil dieses Verfahrens besteht darin, daß es sich maßgeblich auf lokalisierte Standziele stützt, die sich durch eine relativ hohe Amplitude im Radarecho auszeichnen und entsprechend präzise und zuverlässig geortet werden können. Auf diese Weise wird eine hohe Robustheit des Verfahrens gegenüber Störeinflüssen erreicht. Da sich im allgemeinen zu einem gegebenen Zeitpunkt nur eine begrenzte Anzahl solcher lokaler Standziele im Ortungsbereich des Radars befinden wird, läßt sich die Auswertung mit vertretbarem Rechenaufwand bewerkstelligen. Ein weiterer wesentlicher Vorteil besteht darin, daß die benutzten Standziele durch Tracking über eine Vielzahl von Meßzyklen verfolgt werden können, so daß die Mehrzahl der in einem aktuellen Meßzyklus ausgewerteten Objekte bereits aus frühere Meßzyklen bekannt ist, und folglich bei der Klassifizierung dieser Objekte als Fahrbahnrandziele oder Störobjekte auf die früheren Ergebnisse zurückgegriffen werden kann.

Bei Standzielen ist es auch möglich, anhand der bekannten, durch Geschwindigkeit und Gierrate gegebenen Fahrzeugbewegung die Positionen der Standziele relativ zum Fahrzeug für Zeitpunkte zu berechnen, zu denen diese Ziele bereits außerhalb des Erfassungsbereiches des Ortungssystems liegen.

Vorteilhafte Ausgestaltungen der Erfindung ergeben sich aus den Unteransprüchen.

Für eine genaue Kursprädiktion wird man bevorzugt sowohl den Verlauf des rechten Fahrbahnrandes als auch den Verlauf des linken Fahrbahnrandes bestimmen. Die betreffenden Prozeduren sind weitgehend unabhängig voneinander, doch kann man bei der einen Prozedur von den Ergebnissen der anderen profilieren. Wenn beispielsweise bei der Bestimmung des rechten Fahrbahnrandes ein Objekt bereits relativ zuverlässig als Fahrbahnrandziel erkannt wurde, so kann dieses bei der Bestimmung des linken Fahrbahnrandes von vorn herein eliminiert werden. Außerdem dürfen natürlich die Krümmungen der beiden Fahrbahnränder einander nicht widersprechen.

Aus der Gesamtheit aller erfaßten Standziele werden ohne Unterscheidung nach linker oder rechter Fahrbahnseite alle möglichen Kombinationen bzw. Teilmengen mit einer bestimmten Mächtigkeit gebildet, und die Elemente jeder Teilmenge werden als Stützstellen für eine Funktion benutzt, die einen hypothetischen Fahrbahnrandverlauf angibt. Man erhält so eine Vielzahl von Funktionen für die statistische Auswertung. Gegebenenfalls können bestimmte Kombinationen, die offensichtlich unplausibel sind, vorab eliminiert werden, beispielsweise Standziele, die auf einer Linie liegen, die im wesentlichen quer zur aktuellen Fahrtrichtung verläuft.

Für mindestens einen Kurvenparameter, beispielsweise für die Krümmung, wird ein Histogramm erstellt, das angibt, wie häufig die verschiedenen Krümmungen in der Kurvenschar auftreten. Die echte Fahrbahnkrümmung zeigt sich dann in dem Histogramm als ein ausgeprägtes Maximum. Für die endgültige Kursprädiktion wird eine Kurve berechnet, deren Krümmung dem Maximum im Histrogramm oder wahlweise einem gewichteten Mittel der erhaltenen Krümmungen, dem Flächenschwerpunkt im Histogramm oder dergleichen entspricht. Die Kurven werden vorzugsweise durch Polynome beschrieben, besonders bevorzugt durch Polynome der Form y = a + cx². Die Koeffizienten c zeigen dann ein deutliches Maximum bei der tatsächlichen Fahrbahnkrümmung oder ggf., in engeren Kurven, auch zwei nahe beieinander liegende Maxima für die Krümmungen des linken und rechten Fahrbahnrandes. Das absolute Glied a zeigt ebenfalls eine signifikante Häufung bei zwei Werten, die die Lage des linken bzw. rechten Fahrbahnrandes in Höhe des eigenen Fahrzeugs angeben. Auf diese Weise erhält man unmittelbar zwei Funktionen (Pakabeln). die den Verlauf des linken und rechten Fahrbahnrandes beschreiben.

Zur Steigerung der Genauigkeit kann bei der statistischen Auswertung der Fehlerbereich der Meßdaten für die einzelnen Standziele berücksichtigt werden, so daß Kurven, die auf genauer gemessenen (näher gelegenen) Objekten basieren, stärker gewichtet werden.

Auch bei diesem Verfahren können ergänzend die Messungen der Positionen von vorausfahrenden Fahrzeugen herangezogen werden, beispielsweise um bestimmte Kombinationen von Standzielen von vornherein zu eliminieren. Wenn z.B. festgestellt wurde, daß ein vorausfahrendes Fahrzeug links an einem Objekt A und rechts an einem Objekt vorbeigefahren ist, so kann die Kombination (A, B) eliminiert werden, da sie offensichtlich keinen echten Fahrbahnrandverlauf repräsentiert.

Im folgenden werden Ausführungsbeispiele der Erfindung anhand der Zeichnung näher erläutert.

Es zeigen:
- Figur 1: ein Diagramm, das die Position eines Fahrzeugs und die Positionen von mit einem Ortungssystem des Fahrzeugs georteten Obj ekten in einem zweidimensionalen Koordinatensystem angibt;
- Figur 2: ein Diagramm entsprechend Figur 1 zur Erläuterung eines ersten Plausibilitätskriteriums;
- Figur 3: ein Diagramm zur Erläuterung eines zweiten Plausibilitätskriteriums;
- Figur 4: ein Diagramm zur Erläuterung eines dritten Plausibilitätskriteriums;
- Fig. 5: ein Diagramm zur Erläuterung der Anwendung der Plausibilitätskriterien auf weitere Objekte;
- Figur 6: ein Diagramm zur Erläuterung eines vierten Plausibilitätskriteriums;
- Figur 7: ein Diagramm zur Erläuterung der Anwendung der Plausibilitätskriterien auf weitere Objekte;
- Figur 8: ein Diagramm zur Erläuterung der Anwendung des dritten Plausibilitätskriteriums auf weitere Objekte;
- Figur 9: ein Diagramm entsprechend Figur 1 zur Illustration des Resultats der Plausibilitätsprüfungen;
- Figur 10: ein Diagramm zur Erläuterung eines fünften Plausibilitätskriteriums;
- Figur 11: ein Diagramm entsprechend Figur 1 zur Illustration eines Verfahrens zur Kursprädiktion gemäß einem zweiten Ausführungsbeispiel;
- Figur 12: ein Fehlerdiagramm zur Illustration eines Verfahrens zur Auswertung von Meßergebnissen bei dem zweiten Ausführungsbeispiel; und
- Figur 13: ein Histrogramm der Meßergebnisse bei dem Verfahren nach dem zweiten Ausführungsbeispiel.

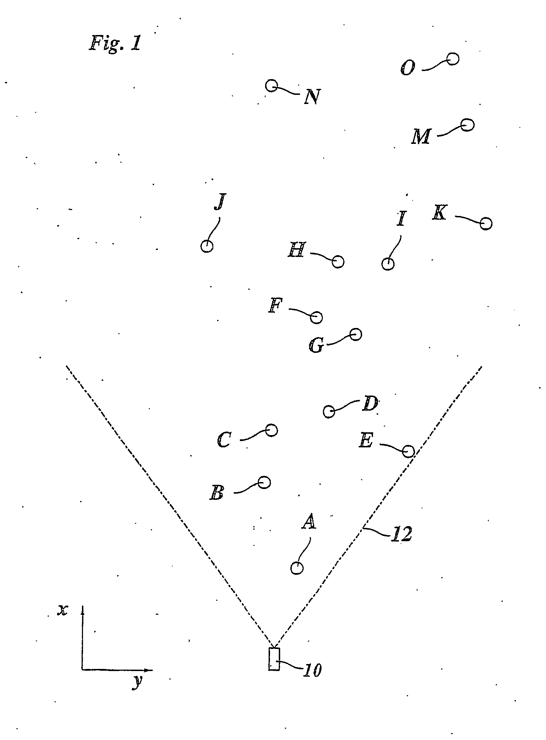

In Figur 1 ist in der Draufsicht ein Fahrzeug 10 dargestellt, das mit einem ACC-System ausgerüstet ist. Zu dem ACC-System gehört ein Radarsensor als Ortungssensor. Der Ortungswinkelbereich 12 des Radarsensors ist mit strichpunktierten Linien angedeutet. Die Fahrtrichtung des Fahrzeugs 10 ist durch einen Pfeil x angegeben. Die zur Fahrtrichtung senkrechte Richtung ist mit y bezeichnet.

Im Ortungsbereich des Radarsensors befinden sich mehrere Objekte A-O, die als Standziele identifiziert wurden, da ihre Relativgeschwindigkeit relativ zum Fahrzeug 10 entgegengesetzt gleich der Eigengeschwindigkeit des Fahrzeugs 10 ist. Die Koordinaten (x, y) wurden für jedes der Objekte A-O mit Hilfe des winkelauflösenden Radarsystems gemessen. Die Aufgabe besteht nun darin, anhand der Positionen der Objekte A - O, von denen einige am Fahrbahnrand liegen, andere jedoch auch abseits des Fahrbahnrandes, den voraussichtlichen Verlauf der Fahrbahn zu bestimmen. Zu diesem Zweck sollen Funktionen berechnet werden, die den Verlauf des linken und des rechten Fahrbahnrandes angeben. Bei den Funktionen handelt es sich im gezeigten Beispiel um Polynome zweiten Grades der Form y = a + cx².

Für die Berechnung der Koeffizienten a und c, von denen das absolute Glied a den Abstand zum Fahrbahnrand auf der Höhe des Fahrzeugs 10 und 2c die Fahrbahnkrümmung angibt, werden jeweils mindestens zwei Stützstellen benötigt. Für die Funktion, die den rechten Fahrbahnrand beschreibt, müssen als Stützstellen Fahrbahnrandobjekte ausgewählt werden, die auf dem rechten Fahrbahnrand liegen. Entsprechendes gilt für den linken Fahrbahnrand.

Die Objekte A-O müssen deshalb zunächst danach klassifiziert werden, ob es sich um Fahrbahnrandobjekte oder um abseits des Fahrbahnrandes gelegene Störobjekte handelt. Außerdem ist für jedes der Objekte zu entscheiden, ob es auf der linken Seite oder auf der rechten Seite der Fahrbahn liegt. Für diese Klassifikation werden Plausibilitätskriterien herangezogen, wie nachstehend im einzelnen erläutert werden soll.

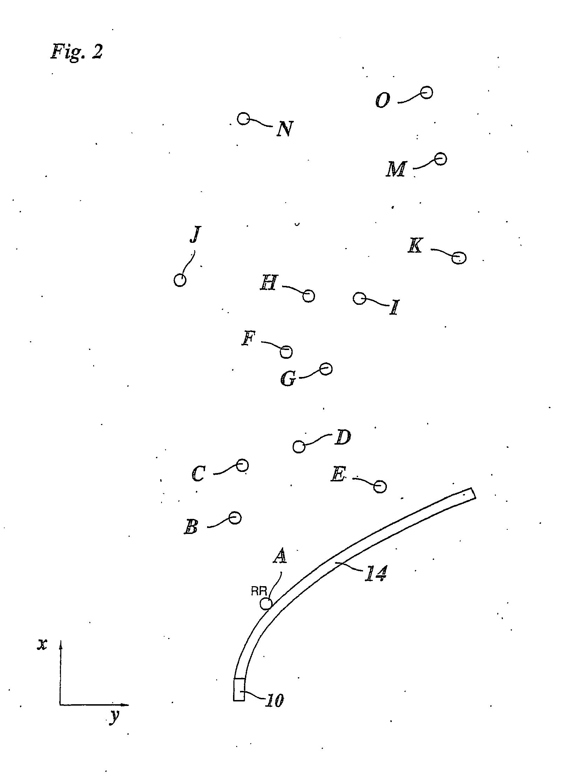

Figur 2 illustriert ein erstes Plausibilitätskriterium, das zur Klassifikation des Objektes A benutzt wird, das dem Fahrzeug 10 am nächsten liegt. Dazu wird zunächst versuchsweise angenommen, daß das Objekt A auf dem linken Fahrbahnrand liegt, und es wird eine Funktion y = a + cx² berechnet, die den Verlauf des linken Fahrbahnrandes einer hypothetischen Fahrbahn 14 beschreibt, die rechts am Objekt A vorbeiführt.

Das absolute Glied a gibt den Abstand des linken Fahrbahnrandes vom Fahrzeug 10 auf der Höhe des Fahrzeugs an (bei x = 0). Wenn in vorausgegangenen Meß- und Berechnungszyklen bereits Funktionen berechnet wurden, die den Verlauf der echten linken und rechten Fahrbahnränder beschreiben, so ist der Wert a bereits bekannt. Notfalls wird der Wert a aufgrund einer plausiblen Annahme für die Fahnbahnbreite geschätzt.

Der Koeffizient c kann dann berechnet werden, indem in die Funktionsgleichung die Koordinaten (x, y) des Objekts A eingesetzt werden. Von einer realen Fahrbahn kann angenommen werden, daß die Kurven nicht übermäßig eng sind. Quantitativ besteht die Annahme darin, daß die maximale Krümmung der Fahrbahn so klein ist, daß die entsprechende Querbeschleunigung des Fahrzeugs 10 bei der aktuellen Fahrzeuggeschwindigkeit nicht größer als ein bestimmter Wert wird, beispielsweise nicht größer als 3 m/s². Hieraus ergibt sich ein bestimmter Grenzwert für den Koeffizienten c. Im gezeigten Beispiel ist der aus den Koordinaten des Objektes A berechnete Wert für c größer als dieser Grenzwert. Das heißt, die hypothetische Fahrbahn 14 ist unplausibel, und das Objekt A kann folglich nicht auf dem linken Fahrbahnrand liegen. Das Objekt A wird deshalb als ein Objekt auf der rechten Fahrbahnseite klassifiziert, was in Figur 2 durch das Symbol RR angegeben wird.

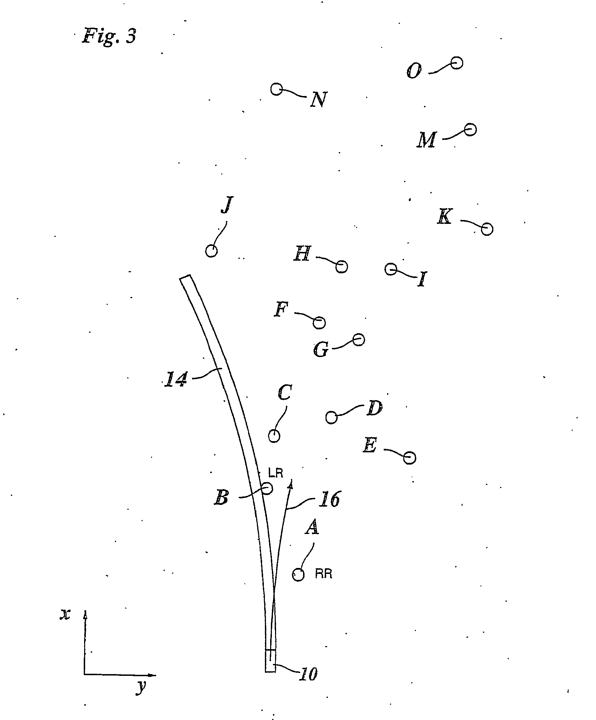

Als nächstes wird das gleiche Kriterium auf das Objekt B angewandt, das dem Fahrzeug am zweitnächsten liegt. Hier erhält man einen Wert für c, der nahezu gleich 0 ist, so daß das erste Kriterium erfüllt ist. Das Objekt B könnte daher auf dem linken Fahrbahnrand liegen. Es ist aber auch nicht ausgeschlossen, daß es auf dem rechten Fahrbahnrand liegt. Ergänzend wird deshalb eine analoge Plausibilitätsprüfung für den rechten Fahrbahnrand ausgeführt, wie in Figur 3 illustriert ist. Man erhält hier für den Koeffizienten c einen (dem Betrage nach) kleineren Wert, der unterhalb des Grenzwertes liegt. Anhand des oben genannten Kriteriums läßt sich daher nicht entscheiden, ob das Objekt B auf der linken oder der rechten Fahrbahnseite liegt.

Für diese Entscheidung wird nun als weiteres Kriterium die aktuelle Fahrdynamik des Fahrzeugs 10 herangezogen. Die Bewegung des Fahrzeugs 10 ist in Figur 3 durch einen gekrümmten Pfeil 16 angegeben. Die Krümmung des Pfeiles 16 entspricht dem aktuellen Lenkeinschlag und damit der aktuellen Querbeschleunigung des Fahrzeugs 10. Man erkennt, daß das Fahrzeug 10 derzeit eine Rechtskurve durchfährt, während die hypothetische Fahrbahn 14 auf eine Linkskurve hindeutet. Es ist jedoch unplausibel, daß sich die Krümmungsrichtung der Fahrbahn auf der relativ kurzen Distanz vom Fahrzeug 10 bis zum Objekt B so stark ändert. Aufgrund dieses Kriteriums kann daher das Objekt B als ein Objekt auf der linken Seite der Fahrbahn klassifiziert werden, was in Figur 3 durch das Symbol LR angegeben wird.

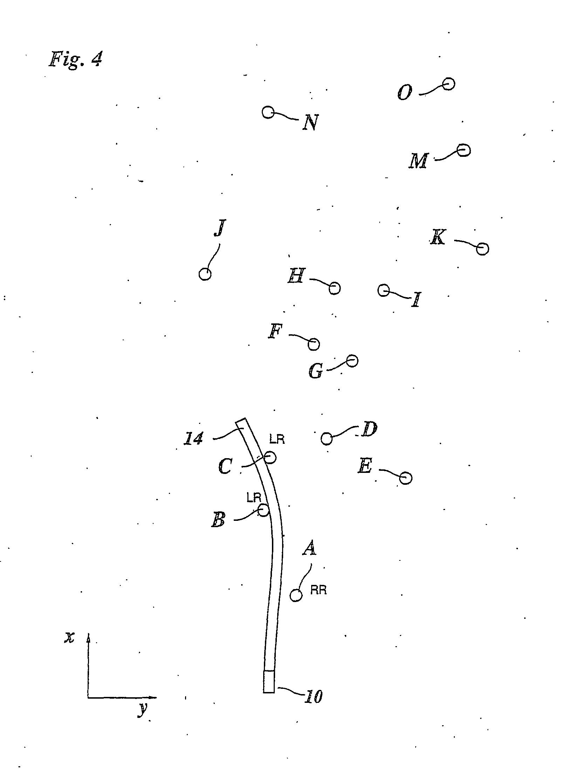

Entsprechende Plausibilitätsprüfungen werden der Reihe nach, mit wachsenden Objektabständen, für die Objekte C bis O durchgeführt. Für das Objekt C würde jedoch keine dieser Plausibilitätsprüfungen ein eindeutiges Ergebnis liefern, wenn man das Vorhandensein des Objektes B unberücksichtigt läßt. Wie Figur 4 zeigt, wird deshalb für das Objekt C eine weitere Plausibilitätsprüfung durchgeführt, die ebenfalls auf der Annahme beruht, daß die echte Fahrbahn nur eine begrenzte Krümmung hat. Versuchsweise wird angenommen, das Objekt C liege am rechten Fahrbahnrand. Da das Objekt B bereits als ein Objekt auf der linken Fahrbahnseite klassifiziert wurde, muß die hypothetische Fahrbahn 14 dann zwischen den Objekten B und C hindurchlaufen. Weiterhin wird angenommen, daß die hypothetische Fahrbahn 14 eine gewisse Mindestbreite hat, beispielsweise 7 m. Mit einem parabelförmigen Fahrbahnverlauf lassen sich diese Annahmen nicht erfüllen. Die Fahrbahn würde dann über das Objekt B führen. Schon aufgrund dieses Kriteriums könnte entschieden werden, daß das Objekt C auf der linken Fahrbahnseite liegt.

Im gezeigten Beispiel wird jedoch eine etwas komplexere Plausibilitätsprüfung durchgeführt, die in einer umfassenderen Klasse von Situationen anwendbar ist. Dazu wird die hypothetische Fahrbahn 14 durch ein Polynom dritten Grades beschrieben, also eine Funktion der Form y = a + cx² + dx³. Das absolute Glied a ist wieder durch den Fahrbahnrandabstand in Höhe des Fahrzeugs 10 gegeben. Die Koeffizienten c und d werden anhand der Positionen der Objekte B und C bestimmt. Als Stützstelle wird nicht unmittelbar das Objekt B genommen, sondern ein Punkt, der um die halbe Fahrbahnbreite (3,5 m) nach rechts vom Objekt B versetzt ist. Entsprechend wird anstelle des Objekts C eine Stützstelle genommen, die um 3,5 m nach links versetzt ist. Wenn man in die Funktionsgleichung einmal die Koordinaten der Stützstelle bei B und einmal die Koordianten der Stützstelle bei C einsetzt, erhält man ein Gleichungssystem, das sich nach c und d auflösen läßt. Die Krümmung der Fahrbahn 14 ist durch die zweite Ableitung der Funktion gegeben, also durch 2c + 6dx. Im Wertebereich zwischen x = 0 und x = "Abstand des Objekts C" darf diese Krümmung nicht größer sein als der Grenzwert für die Krümmung der Fahrbahn. Da diese Bedingung im gezeigten Beispiel nicht erfüllt ist, läßt sich schließen, daß die Objekte B und C auf derselben Fahrbahnseite liegen. Da B bereits als ein Objekt auf der linken Fahrbahnseite klassifiziert wurde, hat auch das Objekt C dieselbe Klassifikation LR.

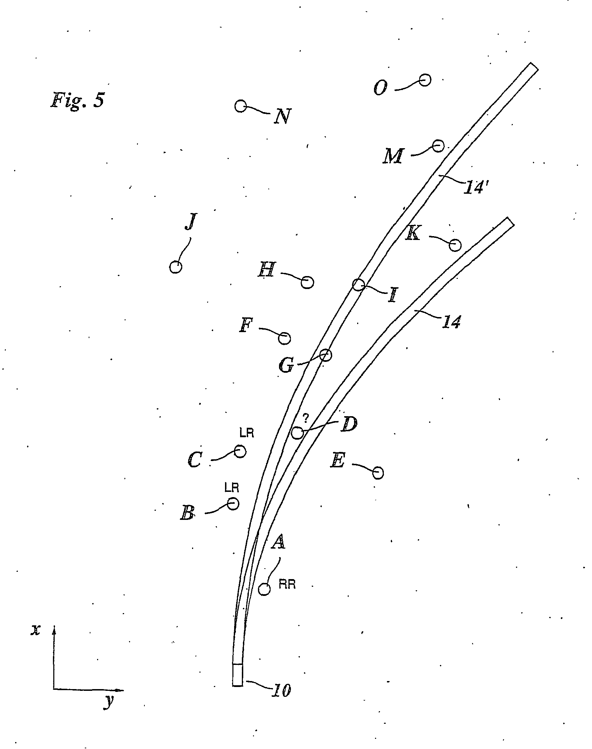

Figur 5 zeigt hypothetische Fahrbahnverläufe 14, 14' für die Annahme, daß das Objekt D am linken Fahrbahnrand bzw. am rechten Fahrbahnrand liegt. Beide Fahrbahnverläufe sind aufgrund der bisher beschriebenen Kriterien möglich, so daß die Klassifikation des Objektes D zunächst unbestimmt bleibt.

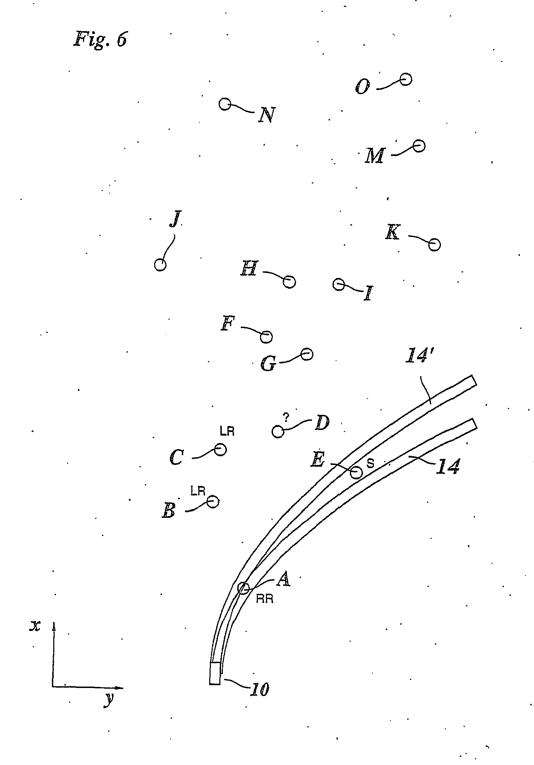

Figur 6 zeigt entsprechende Fahrbahnverläufe 14, 14' für das Objekt E. Beide hypothetischen Fahrbahnverläufe 14 und 14' würden hier jedoch mit dem Objekt A kollidieren. Die gleichen Überlegungen, die im Zusammenhang mit dem Objekt C erläutert wurden, führen hier nicht nur zu dem Schluß, daß das Objekt E auf der rechten Fahrbahnseite liegt, sondern auch zu dem Schluß, daß dieses Objekt kein Fahrbahnrandobjekt ist, sondern weiter vom tatsächlichen Fahrbahnrand abgelegen ist. Das Objekt E wird deshalb als ein Störobjekt qualifiziert, was durch das Symbol S angedeutet wird.

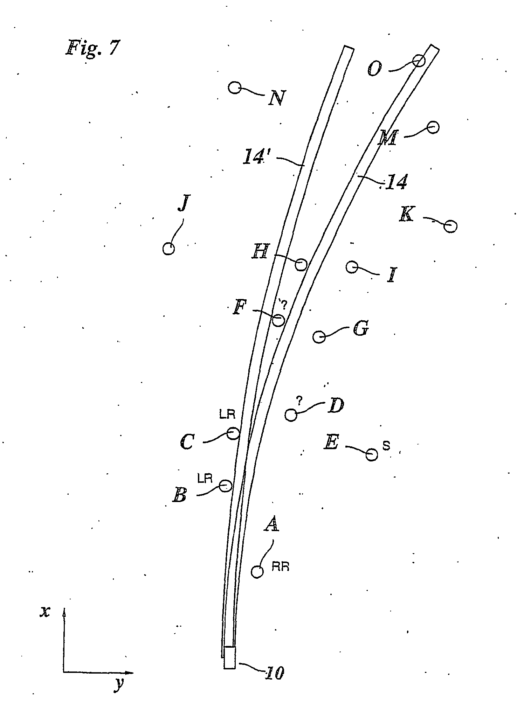

Figur 7 zeigt die hypothetischen Fahrbahnverläufe 14, 14' für das Objekt F. Auch hier führen die bisherigen Plausibilitätsprüfungen nicht zu einem eindeutigen Ergebnis, so daß die Klassifikation unbestimmt bleibt.

Entsprechend würden die bisher erörterten Plausibilitätskriterien auch bei den Objekten G, H und I nicht zu einem eindeutigen Ergebnis führen. Sie erlauben jedoch immerhin eine Aussage über die Zuordnung zur linken oder rechten Fahbahnseite.

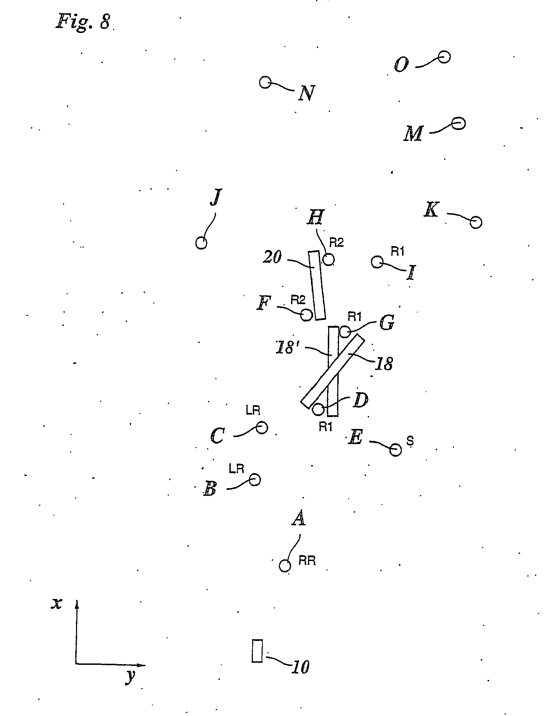

Figur 8 zeigt hypothetische Fahrbahnverläufe 18, 18', hier nur durch kurze Fahrbahnstücke angedeutet, die zwischen den Objekten D und G hindurchführen. Die Überlegungen, die bereits mit Bezug auf das Objekt C erläutert wurden, führen hier zu dem Resultat, daß die Objekte D und G auf derselben Fahrbahnseite liegen. Die gleiche Feststellung kann analog auch für die Objekte G und I getroffen werden. Alle drei Objekte werden deshalb vorläufig in eine unbestimmte Klasse R1 eingeordnet.

Weiterhin zeigt Figur 8 einen hypothetischen Fahrbahnverlauf 20, der zwischen den Objekten F und H hindurchführt. Auch hier führen die gleichen Überlegungen zu dem Ergebnis, daß diese beiden Objekte auf derselben Fahrbahnseite liegen. Sie werden in eine unbestimmte Klasse R2 eingeordnet. Nun ist aber weiterhin zu erkennen, daß die Objekte F und G annähernd denselben Abstand zum Fahrzeug 10 haben. Sie können folglich nicht auf demselben Fahrbahnrand liegen. Da das Objekt G rechts vom Objekt F liegt, läßt sich nun entscheiden, daß die Objekte D, G und I rechts von der Fahrbahn liegen (Kategorie RR), die Objekte F und H hingegen links von der Fahrbahn (Kategorie LR).

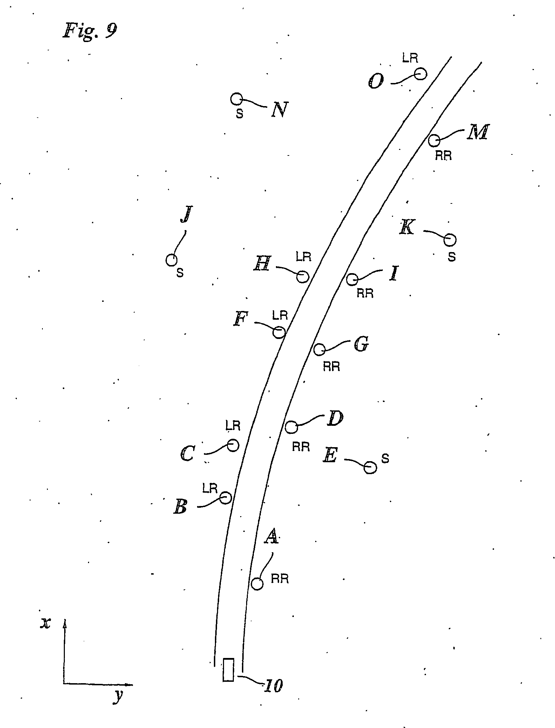

In Figur 9 sind die entsprechenden Klassifikationen für die Objekte G bis I vollzogen. Wenn man annimmt, daß die Objekte D, G und I Fahrbahnrandziele sind, also wirklich auf dem rechten Fahrbahnrand liegen, so läßt sich für jedes dieser Objekte eine Parabel berechnen, die den betreffenden Fahrbahnrand beschreibt (jeweils mit dem Fahrzeug 10 als zweiter Stützstelle). Man erkennt, daß sich jeweils im wesentlichen dieselben Parabeln ergeben. Dasselbe gilt für die Objekte B, C, F und H. Weitere Überprüfungen der übrigen Objekte zeigen, daß man auch für die Objekte M und O jeweils annähernd eine der schon bekannten Parabeln enthält, nicht dagegen für die Objekte J und K. Deshalb ist es gerechtfertigt, die Objekte M und O als Fahrbahnrandziele zu klassifizieren (Kategorie RR bzw. LR), die Objekte K und N hingegen als Störobjekte (Kategorie S). Wenn man nun alle Störobjekte eliminiert, lassen sich anhand der verbliebenen Fahrbahnrandziele zwei Parabeln bestimmen, die jeweils die beste Annäherung für die Objekte am rechten bzw. linken Fahrbahnrand darstellen und deshalb mit hoher Wahrscheinlichkeit den tatsächlichen Verlauf der rechten und linken Fahrbahnränder repräsentieren. Es wurde somit die Aufgabe gelöst, allein durch Auswertung der Ortskoordinaten der Standziele eine plausible Kursprädiktion vorzunehmen.

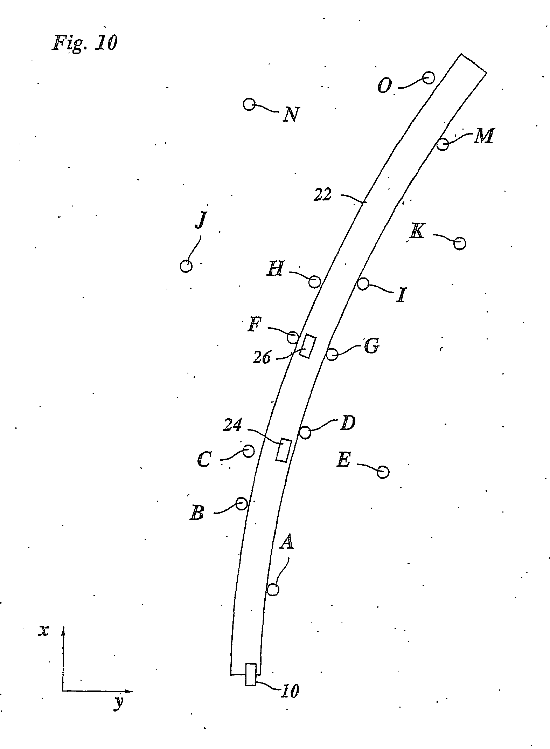

In Figur 10 ist der entsprechende Verlauf der echten Fahrbahn 22 eingezeichnet. Weiterhin sind hier die Positionen zweier vorausfahrender Fahrzeuge 24 und 26 eingezeichnet, die seitlich versetzt und auf verschiedenen Fahrspuren die Fahrbahn 22 befahren. Gemäß einer zweckmäßigen Ausgestaltung des Verfahrens werden die Positionen dieser vorausfahrenden Fahrzeuge ebenfalls als Plausibilitätskriterien herangezogen. Zwar lassen die Positionen der Fahrzeuge 24 und 26 selbst den Fahrbahnverlauf nur ungenau erkennen, da jedoch das Fahrzeug 24 gerade die Objekte C und E passiert, läßt sich das Objekt C schon allein durch Vergleich mit der Position des Fahrzeugs 24 eindeutig als Objekt auf der linken Fahrbahnseite klassifizieren, und das Objekt E kann wegen des großen Abstands zuf Fahrzeug 24 als Störobjekt klassifiziert werden. Entsprechend lassen sich mit Hilfe des Fahrzeugs 26 die Objekte F und G eindeutig als Objekte auf der linken bzw. rechten Fahrbahnseite klassifizieren. Durch die Auswertung der Kriterien, die auf die Positionen von vorausfahrenden Fahrzeugen Bezug nehmen, läßt sich der Rechenaufwand beträchtlich reduzieren und entsprechend die Berechnung beschleunigen. Zugleich wird so die Zuverlässigkeit des Verfahrens deutlich erhöht.

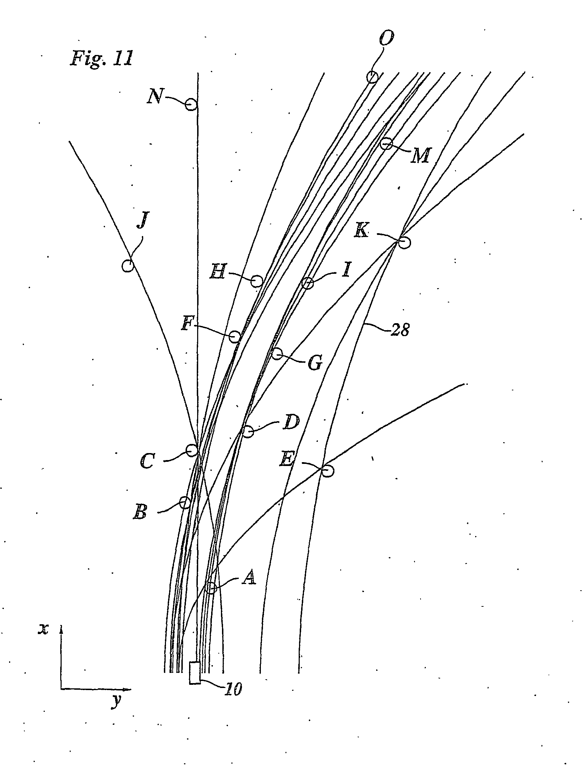

Figur 11 illustriert eine weitere Ausführungsform des Verfahrens, bei der hypothetische Fahrbahnrandkurven 28 statistisch ausgewertet werden. Die Fahrbahnrandkurven 28 sind wieder durch Parabeln der Form y = a + cx² gegeben. Zur Berechnung der Koeffizienten a und c werden hier jeweils die Positionen von zweien der Objekte A - O als Stützstellen verwendet. Grundsätzlich kann jedes der Objekte A - O mit jedem anderen dieser Objekte ein Paar bilden, das eine entsprechende Fahrbahnrandkurve 28 definiert. Bei n Objekten ist die Zahl der möglichen Fahrbahnrandkurven 28, von denen in Figur 11 lediglich einige als Beispiel dargestellt sind, gegeben durch n(n-1)/2. Paare von Objekten, die etwa den gleichen Abstand vom Fahrzeug 10 aufweisen, aber einen deutlichen Winkelabstand zueinander haben, können von vornherein unberücksichtigt bleiben, da die entsprechenden Parabeln keinen realistischen Verlauf des Fahrbahnrandes repräsentieren. Sofern, ähnlich wie in Figur 10, auch die Positionen von vorausfahrenden Fahrzeugen ausgewertet werden, können auch solche Paare von Objekten unberücksichtigt bleiben, von denen bereits bekannt ist, daß sie auf verschiedenen Seiten der Fahrbahn liegen. Die Anzahl der als nicht völlig ausgeschlossen verbleibenden Fahrbahnrandkurven 28 ist im allgemeinen so hoch, daß eine statistische Auswertung möglich ist.

Da es sich in der Regel bei der Mehrzahl der erfaßten Objekte um echte Fahrbahnrandziele handeln wird, beispielsweise um Stützpfosten für Leitplanken, Leitpfosten, Verkehrsschilder und dergleichen, ergibt sich eine statistische Häufung der Fahrbahnrandkurven, die annähernd den linken und rechten Fahrbahnrändern entsprechen. Man kann so die echte Fahrbahnkrümmung ermitteln, indem man überprüft, bei welchem Wert die Krümmungen der Fahrbahnrandkurven 28 bzw. die zugehörigen Koeffizienten c ein Häufigkeitsmaximum aufweisen.

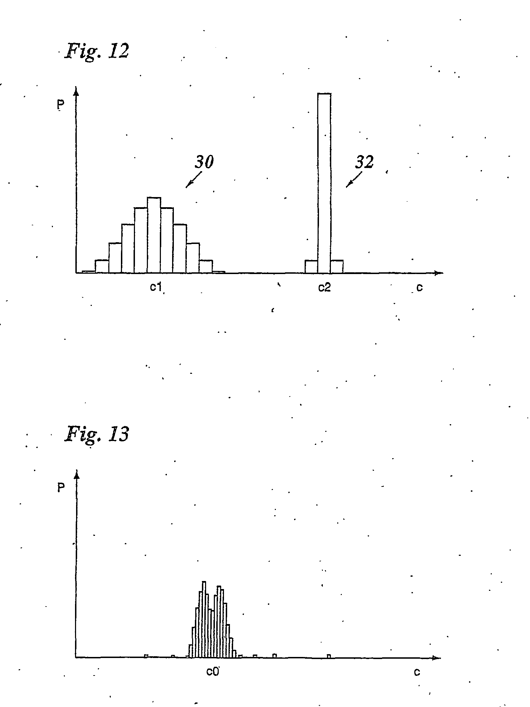

Zweckmäßigerweise wird dabei berücksichtigt, daß die Koordinaten der Objekte A bis O in der Praxis nur mit einer begrenzten Genauigkeit bekannt sind, wobei die Fehlergrenzen (insbesondere hinsichtlich der y-Koordinate) bei weiter entfernten Objekten in der Regel größer sein werden als bei näher am Fahrzeug 10 gelegten Objekten. Anhand der bekannten Fehlergrenzen für die Koordinaten der Objekte kann man daher auch für die Koeffizienten c (und auch für die Koeffizienten a) jeder der Fahrbahnrandkurven entsprechende Fehlergrenzen angeben. Für den tatsächlichen Wert des Koeffizienten c kann man dann eine Wahrscheinlichkeitsverteilung annehmen, beispielsweise eine Gauß-Verteilung, mit einer großen Streuung für große Fehlergrenzen und einer geringen Streuung bei engen Fehlergrenzen. Beispiele für solche Wahrscheinlichkeitsverteilungen sind in Figur 12 in Histogrammform dargestellt. Auf der waagerechten Achse ist in Figur 12 der Koeffizient c angegeben, auf der senkrechten Achse die Wahrscheinlichkeit p. Die relativ breite Wahrscheinlichkeitsverteilung 3O entspricht einer Fahrbahnrandkurve 28, für die die Krümmung bzw. der Koeffizient c nur relativ ungenau bestimmt werden konnte. Der tatsächlich gemessene Wert c1 entspricht dem Maximum der Wahrscheinlichkeitsverteilung. Die Wahrscheinlichkeitsverteilung 32 entspricht dagegen einer Fahrbahnrandkurve 28, für die mit relativ hoher Genauigkeit der Wert c2 für die Krümmung c ermittelt wurde. Für jede der ausgewerteten Fahrbahnrandkurven 28 wird eine solche Wahrscheinlichkeitsverteilung in Histogrammform erstellt. Der mögliche Bereich der Koeffizienten c ist in diskrete Intervalle eingeteilt, und die entsprechenden Wahrscheinlichkeiten p werden als diskrete Werte, beispielsweise als ganze Zahlen angegeben. Diese Zahlen können so gewählt werden, daß die Flächen unter den Verteilungskurven für alle Fahrbahnrandkurven gleich sind. In diesem Fall werden alle Fahrbahnrandkurven gleich gewichtet, doch ist bei den weniger genau vermessenen Kurven die Streuung größer. Wahlweise ist es auch möglich, die genauer vermessenen Kurven stärker zu gewichten.

Figur 13 zeigt ein Diagramm, das dadurch erhalten wurde, daß die Wahrscheinlichkeitsverteilungen für sämtliche Fahrbahnrandkurven 28 addiert wurden. Dieses Histogramm zeigt ein deutliches Maximum bei einem Wert c0. entsprechend der tatsächlichen Krümmung der Fahrbahn. Für die unechten Fahrbahnrandkurven 28, die durch "falsche" Kombinationen von Objekten gewonnen wurden, weisen die Koeffizienten c dagegen eine deutlich stärkere Streuung auf, so daß sie sich in dem Histogramm in Figur 13 nur als Hintergrundrauschen bemerkbar machen.

Wenn die tatsächliche Fahrbahn eine relativ enge Kurve beschreibt und wenn verhältnismäßig viele echte Fahrbahnrandziele vorhanden sind, können in dem Histogramm auch zwei Teilmaxima aufgelöst werden, die den etwas unterschiedlichen Krümmungen des linken und des rechten Fahrbahnrandes entsprechen.

Schon anhand der aus dem Histogramm gemäß Figur 13 ableitbaren Lage des Maximums oder des Flächenschwerpunkts bei c0 läßt sich eine Parabel y = cx² berechnen, die mit guter Näherung dem tatsächlichen Fahrbahnverlauf entspricht und durch die Mitte des Fahrzeugs 10 verläuft. Bei Verwendung des flächenschwerpunkts läßt sich die Genauigkeit noch dadurch steigern, daß die abseits des Maximums gelegenen Werte für c in dem Histogramm eliminiert werden. Weiterhin kann der Wertebereich für den Koeffizienten c auf die "plausiblen" Krümmungen eingegrenzt werden, also beispielsweise auf solche, die einer Querbeschleunigung des Fahrzeugs von weniger als 3 m/s² entsprechen. Ebenso kann der Wertebereich sowie die Aufteilung des Wertebereiches in diskrete Werte für c geschwindigkeitsabhängig angepaßt werden, da bei einer kurvenreichen, mit niedriger Geschwindigkeit befahrenen Landstraße die Krümmungen über einen weiteren Bereich streuen werden als bei einer Autobahn.

Die statistische Auswertung, die oben für den Koeffizienten c beschrieben wurde, läßt sich entsprechend auch für den Koeffizienten a durchführen. Hier wird man zwei deutlich unterscheidbare Maxima finden, die die Lage des linken und rechten Fahrbahnrandes angeben. Anhand der so ermittelten Koeffizienten a und des aus Figur 13 ermittelten Koeffizienten c0 lassen sich dann Parabeln der Form y = a + c₀ . x² angeben, die den Verlauf des linken und des rechten Fahrbahnrandes beschreiben.

Wahlweise kann man jedoch aus dem Histogramm in Figur 13 auch diejenigen Fahrbahnrandkurven herausgreifen, die zu dem Maximum in der Nähe von c0 beitragen und dann nur für diese Fahrbahnrandkurven eine statistische Auswertung nach a vornehmen. Wenn das Histogramm, wie in Figur 13, zwei unterscheidbare Peaks für den linken und den rechten Fahrbahnrand aufweist, kann man auch für die Parabel, die den linken Fahrbahnrand beschreiben soll, nur diejenigen Fahrbahnrandkurven 28 heranziehen, die innerhalb des betreffenden Peaks liegen - bei einer Rechtskurve sind dies die mit den größere Krümmungen - und dann aus den Koeffizienten a für diese Fahrbahnrandkurven den Mittelwert bilden. Entsprechendes gilt für den rechten Fahrbahnrand. Auch der Wertebereich für die Koeffizienten a wird zweckmäßig auf plausible Fahrbahnbreiten eingegrenzt. Fahrbahnrandkurven, deren Koeffizient a außerhalb dieses Wertebereichs liegt, können dann vorab eliminiert werden.

Umgekehrt kann mach auch zunächst eine statistische Auswertung nach den Koeffizienten a vornehmen und dann für die Kurven, die zu den Maxima für a beitragen, das Häufigkeitsmaximum des Koeffizienten c suchen.

Im Prinzip läßt sich das Statistikverfahren auch auf Polynome höheren Grades verallgemeinern. Allerdings wird dann die Zahl der Stützstellen und damit die Zahl der möglichen Kombinationen von Stützstellen so groß, daß der Rechenaufwand sehr groß würde. Praktikabel ist es allerdings, zunächst durch statistische Auswertung der parabelförmigen Fahrbahnrandkurven 28 diejenigen Objekte zu bestimmen, die echte Fahrbahnrandziele sind, und dann die Fahrbahnrandziele auf dem rechten und linken Fahrbahnrand jeweils durch ein Polynom höherer Ordnung zu approximieren.

## Patentansprüche

1. Verfahren zur Kursprädiktion bei Kraftfahrzeugen, die ein Ortungssystem für vor dem Fahrzeug (10) befindliche Objekte (A - O) aufweisen, bei dem anhand gemessener Abstands- und Azimutwinkeldaten für Standziele am Fahrbahnrand eine Funktion berechnet wird, die den Verlauf des Fahrbahnrandes beschreibt, wobei mehrere Standziele identifiziert und verfolgt werden, man für mehrere Teilmengen der Menge der verfolgten Standziele, unter der Annahme, daß diese Standziele am Fahrbahnrand liegen, jeweils einen möglichen Fahrbahnrandverlauf abschätzt und aus den erhaltenen möglichen Fahrbahnrandverläufen anhand vorgegebener Plausibilitätskriterien den wahrscheinlichsten Fahrbahnrandverlauf bestimmt, **dadurch gekennzeichnet, daß** die möglichen Fahrbahnrandverläufe und der wahrscheinlichste Fahrbahnrandverlauf durch Polynome der Form y = a + cx² beschrieben werden und daß die aus der Vielzahl der Teilmengen erhaltenen möglichen Fahrbahnrandverläufe statistisch ausgewertet werden, wobei ein Plausibilitätskriterium darin besteht, daß mindestens ein Parameter (c) der Funktionen, die diese Fahrbahnrandverläufe beschreiben, ein signifikantes Häuftgkeitsmaximum bei dem Wert aufweist, der dem echten Fahrbahnrandverlauf entspricht.

2. Verfahren nach Anspruch 1, **dadurch gekennzeichnet, daß** die Ortungsdaten von vorausfahrenden Fahrzeugen (24, 26) als Plausibilitätskriterium für die Zuordnung von Standzielen zur linken oder rechten Fahrbahnseite und/oder für die Identifizierung von Störobjekten herangezogen werden.

3. Verfahren nach Anspruch 1 oder 2, **dadurch gekennzeichnet, daß** die aus der Menge der Standziele gebildeten Teilmengen, die zur Abschätzung möglicher Fahrbahnrandverläufe herangezogen werden, jeweils mindestens zwei Standziele umfassen.

4. Verfahren nach den Anspruch 3, **dadurch gekennzeichnet, daß** die Fahrbahnrandverläufe durch Polynome zweiten Grades beschrieben werden.

5. Verfahren nach Anspruch 4, **dadurch gekennzeichnet, daß** der Parameter, der auf ein statistisches Häufigkeitsmaximum untersucht wird, der Koeffizient (c) des quadratischen Terms des Polynoms ist.

6. Verfahren nach einem der vorstehenden Ansprüche, **dadurch gekennzeichnet, daß** die statistische Auswertung der möglichen Fahrbahnrandverläufe unter Berücksichtigung der jeweiligen Meßgenauigkeit erfolgt.

7. Verfahren nach einem der vorstehenden Ansprüche, **dadurch gekennzeichnet, daß** zur Bestimmung des Fahrbahnrandverlaufes auch Standziele herangezogen werden, die den Erfassungsbereich des Ortungssystems bereits verlassen haben und deren Positionen anhand der bekannten Fahrzeugbewegung berechnet werden.

8. Vorrichtung zur Kursprädiktion in Kraftfahrzeugen, mit einem Ortungssystem für vor dem Fahrzeug (10) befindliche Objekte (A - O) und einem Datenverarbeitungssystem zur Berechnung des Verlaufes des Fahrbahnrandes, **dadurch gekennzeichnet, daß** das Datenverarbeitungssystem zur Durchführung des Verfahrens nach einem der vorstehenden Ansprüche ausgebildet ist.

## Claims

1. Method for predicting the course of motor vehicles which have a locating system for objects (A-O) located in front of the vehicle (10), in which method a function which describes the profile of the edge of the carriageway is calculated by means of measured distance and azimuth angle data for stationary targets at the edge of the carriageway, where a plurality of stationary targets are identified and tracked, in each case a possible profile of the edge of the carriageway is estimated for a plurality of subsets of the set of tracked stationary targets assuming that these stationary targets are located at the edge of the carriageway, and the most probable profile of the edge of the carriageway is determined from the acquired possible profiles of the edge of the carriageway using predefined plausibility criteria, **characterized in that** the possible profiles of the edge of the carriageway and the most probable profile of the edge of the carriageway are described by means of polynomials of the form y = a + cx², and **in that** possible profiles of the edge of the carriageway which are acquired from the plurality of subsets are evaluated statistically, wherein a plausibility criterion consists in the fact that at least one parameter (c) of the functions which describe these profiles of the edge of the carriageway has a significant maximum frequency value at the value which corresponds to the genuine profile of the edge of the carriageway.

2. Method according to Claim 1, **characterized in that** the locating data from vehicles (24, 26) travelling ahead are used as a plausibility criterion for assigning stationary targets to the left-hand or righthand side of the carriageway and/or for identifying interference objects.

3. Method according to Claim 1 or 2, **characterized in that** the subsets which are formed from the set of stationary targets and which are used to estimate possible profiles of the edge of the carriageway each comprise at least two stationary targets.

4. Method according to Claim 3, **characterized in that** the profiles of the edge of the carriageway are described by means of second-order polynomials.

5. Method according to Claim 4, **characterized in that** the parameter which is examined for a statistical maximum frequency value is the coefficient (c) of the quadratic term of the polynomial.

6. Method according to one of the preceding claims, **characterized in that** the statistical evaluation of the possible profiles of the edge of the carriageway is carried out taking into account the respective measuring accuracy.

7. Method according to one of the preceding claims, **characterized in that** for the determination of the profile of the edge of the carriageway stationary targets which have already left the coverage area of the locating system and whose positions are calculated using the known movement of the vehicle are also used.

8. Device for predicting the course of motor vehicles, having a locating system for objects (A-O) located in front of the vehicle (10) and a data processing system for calculating the profile of the edge of the carriageway, **characterized in that** the data processing system is designed to carry out the method according to one of the preceding claims.

## Revendications

1. Procédé de prévision de la trajectoire d'un véhicule équipé d'un système de localisation d'objets (A-O) situés devant le véhicule (10), selon lequel on calcule une fonction à l'aide des données de distance et d'angle d'azimut mesurées pour des cibles fixes au bord de la chaussée, cette fonction décrivant le tracé du bord de la chaussée,
on identifie plusieurs cibles fixes et on les poursuit et pour plusieurs sous-ensembles de l'ensemble des cibles fixes poursuivies, dans l'hypothèse que ces cibles fixes se situent le long du bord de la chaussée, on évalue chaque fois un tracé possible du bord de la chaussée et, à partir des tracés possibles obtenus pour le bord de la chaussée, on définit le tracé le plus probable du bord de la chaussée à l'aide de critères de plausibilité, prédéfinis,
**caractérisé en ce qu'**
on décrit les tracés possibles du bord de la chaussée et le tracé le plus probable du bord de la chaussée par des polynômes de la forme y=a+cx² et
on exploite statistiquement les tracés possibles du bord de la chaussée correspondant à la multiplicité des sous-ensembles,
un critère de plausibilité signifiant qu'au moins un paramètre (c) des fonctions décrivant les tracés des bords de chaussée correspond à un maximum de fréquence, significatif, pour la valeur correspondant au véritable tracé du bord de la chaussée.

2. Procédé selon la revendication 1,
**caractérisé en ce que**
les données de localisation des véhicules qui précèdent (24, 26) sont utilisées comme critère de plausibilité pour associer des cibles fixes du côté gauche ou du côté droit de la chaussée et/ou pour identifier des objets perturbateurs.

3. Procédé selon la revendication 1 ou 2,
**caractérisé en ce que**
les sous-ensembles formés à partir de l'ensemble des cibles fixes et utilisés pour évaluer les tracés possibles du bord de la chaussée, contiennent chacun au moins deux cibles fixes.

4. Procédé selon la revendication 3,
**caractérisé en ce qu'**
on décrit le tracé des bords de la chaussée par des polynômes du second ordre.

5. Procédé selon la revendication 4,
**caractérisé en ce que**
le paramètre examiné du point de vue du maximum de la fréquence statistique est le coefficient (c) du terme quadratique du polynôme.

6. Procédé selon l'une des revendications précédentes,
**caractérisé en ce que**
l'exploitation statistique des tracés possibles du bord de la chaussée se fait en tenant compte de la précision respective des mesures.

7. Procédé selon l'une des revendications précédentes,
**caractérisé en ce que**
pour déterminer le tracé du bord de la chaussée, on utilise également des cibles fixes qui ont déjà échappé à la plage de saisie du système de localisation et dont on calcule les positions à l'aide du mouvement connu du véhicule.

8. Dispositif de prévision de la trajectoire d'un véhicule automobile équipé d'un système de localisation des objets (A-O) situés devant le véhicule (10) et d'un système de traitement de données pour calculer le tracé du bord de la chaussée,
**caractérisé en ce que**
le système de traitement des données est réalisé pour exécuter le procédé selon l'une des revendications précédentes.
